# EUROPEAN PATENT APPLICATION

(11) **EP 2 018 953 A1**
(43) Date of publication of application: **28.01.2009**
(21) Application number: 07014437.3
(22) Date of filing: 23.07.2007
(51) Int. Cl.: B29C 70/46, B29C 70/44, B29C 33/10

(54) **Forming method for fiber reinforced resin**

(71) Applicant: Yuan Min An Enterprise Co., Ltd., Fong Yuan, Taichung (TW)
(72) Inventor: Yu, Kuo-Pin, Fong Yuan Taichung (TW)
(74) Representative: Straus, Alexander

(57) **Abstract**

A forming method for fiber reinforced resin includes the following steps. First, put a stack of pre-pregs into a cavity (14, 68, 83) of a die (12, 50, 80) having a plurality of openings (22, 86) in communication with the cavity (14, 68, 83) and the space outside the die (12, 50, 80). Then heat the die (12, 50, 80) and exhaust air through the openings (22, 86) from the cavity (14, 68, 83) of the die (12, 50, 80). Thus, the air bubbles (18) between the pre-pregs as well as surplus resin can be drawn out such that the product has improved mechanical strength.

## Description

### BACKGROUND OF THE INVENTION

### 1. Field of the Invention

The present invention relates to fiber reinforced resin and more particularly, to a forming method for fiber reinforced resin, which can remove air bubbles inside the fiber reinforced resin effectively such that the product has improved mechanical strength.

### 2. Description of the Related Art

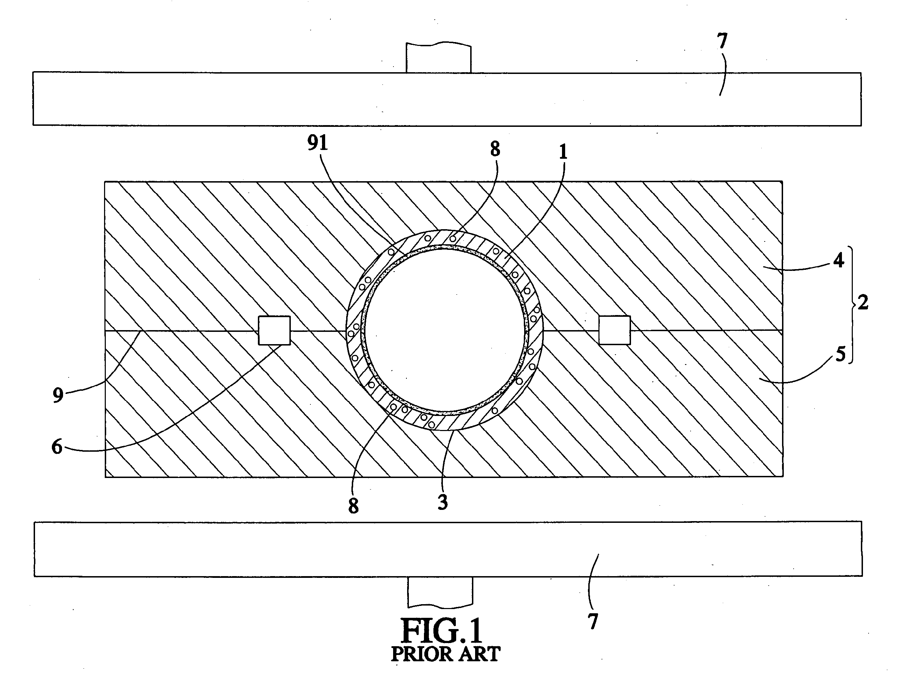

As shown in FIG 1, a conventional forming method for fiber reinforced resin is to roll a stack of pre-pregs into a tube **1,** then put the tube **1** into a cavity **3** of a die **2.** The die **2** consists of an upper die **4** and a lower die **5** between which an annular resin groove **6** surrounding the cavity **3** is defined. Heat the die **2** with two heating board **7** and pump high pressure air into an envelope **91** inside the tube **1** such that the tube **1** is inflated to stop against the periphery of the cavity **3.** The tube **1** is then cured after a period of times

In accordance with technology level nowadays, it is not possible to avoid the generation of the air bubbles **8** between pre-pregs while stacking the pre-pregs. The mechanical strength of the product is reduced due to these structural defects, i.e. the air bubbles **8.** One solution to improve this situation is to exhaust air outside the heated die **2. The** air bubbles **8** between the pre-pregs are drawn out when the resin is heated and melts. But the effect is only obvious at a part of the pre-pregs near the gap **9** between the upper die **4** and the lower die **5.** The air bubbles **8** in the other part of the pre-pregs are still very hard to be drawn out. Another solution is to exhaust air from the resin groove **6** to draw out the air bubbles **8.** It has a better effect than the aforesaid one, but the influenced area of the pre-pregs is still limited to the position near the gap 9. The number of the air bubbles **8,** i.e. structural defects, in the product formed by this way is still large such that the mechanical strength is poor.

### SUMMARY OF THE INVENTION

The present invention has been accomplished under the circumstances in view. It is one object of the present invention to provide a forming method for fiber reinforced resin, which can remove air bubbles inside the fiber reinforced resin effectively.

It is another object of the present invention to provide a forming method for fiber reinforced resin, the product of which has improved mechanical strength.

To achieve these and other objects of the present invention, the forming method for fiber reinforced resin includes the following steps. First, put a stack of pre-pregs into a cavity of a die having a plurality of openings in communication with the cavity and the space outside the die. Then heat the die and exhaust air through the openings from the cavity of the die. Thus, the air bubbles between the pre-pregs as well as surplus resin can be drawn out such that the product has improved mechanical strength.

### BRIEF DESCRIPTION OF THE DRAWINGS

FIG 1 is a schematic view of the conventional forming method for fiber reinforced resin.
FIG 2 is a perspective view of a die adopted by a first embodiment of the present invention.
FIG 3 is a schematic view of the first embodiment of the present invention.
FIG 4 is a schematic view of a second embodiment of the present invention.
FIG 5 is a schematic view of a third embodiment of the present invention.

### DETAILED DESCRIPTION OF THE INVENTION

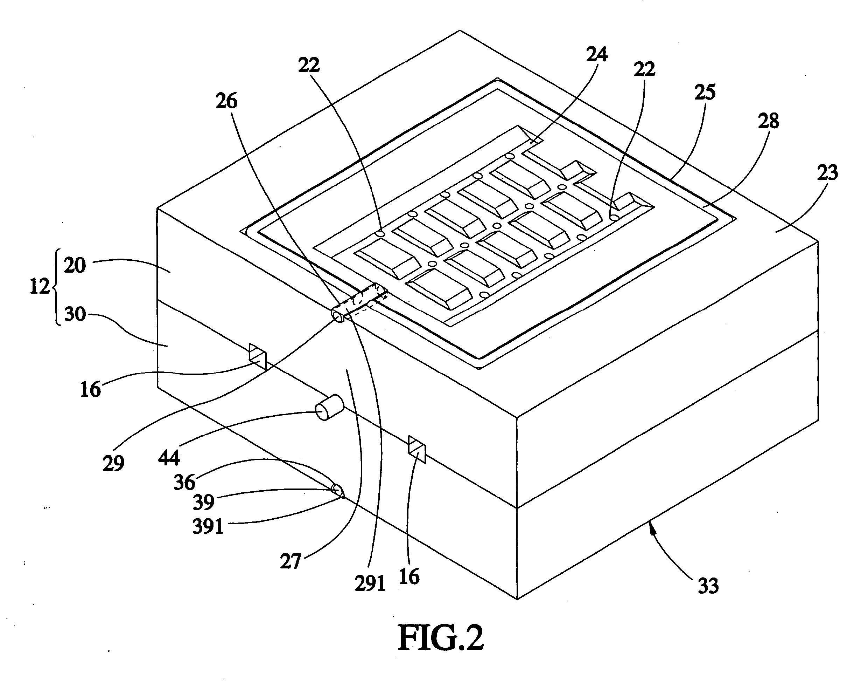

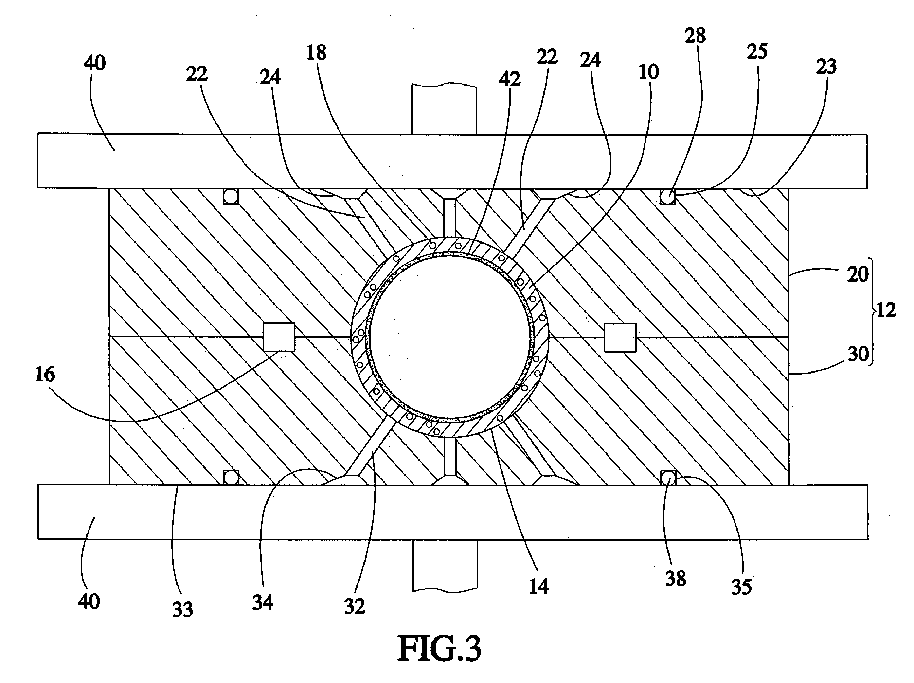

Referring to FIGS. 2-3, a forming method for fiber reinforced resin in accordance with the first embodiment of the present invention comprises the following steps. First, roll a stack of pre-pregs into a tube **10** and then put the tube **10** into a cavity **14** of a die **12.** The fiber of the pre-pregs can adopt but not limit to carbon fiber, glass fiber, boron fiber or Kevlar fiber. The resin of the pre-pregs can adopt thermosetting resin or thermoplastic resin. The die **12** consists of an upper die **20** and a lower die **30.** An annular groove **16** surrounding said cavity **14** is defined between the upper die **20** and the lower die **30.**

The upper die **20** is provided with a plurality of opening **22** in communication with the cavity **14** and the space outside the die **12.** A top surface **23** of the upper die **20** is provided with a trough **24,** an annular channel **25** surrounding said trough **24,** and a receiving trench **26** extending from said trough **24** to a side surface **27** of the upper die **20.** The openings **22** are located within the trough **24.** A seal **28** made of flexible material, such as silicone and rubber, is received in the annular channel **25.** An air valve **29** with a sheath **291** is received in the receiving trench **26.** The sheath **291** is also made of flexible material such as silicone or rubber such that the air valve **29** is well airtight.

Similarly, the lower die **30** has a plurality of openings **32,** a trough **34** located at the bottom surface **33,** an annular channel **35,** a receiving trench **36,** a seal **38** and an air valve **39** with a sheath **391.**

Then, two heating boards **40** are respectively stopped against the top surface **23** of the upper die **20** and the bottom surface **33** of the lower die **30.** On the one hand, the heating boards **40** heat the die **12;** on the other hand, the heating boards **40** press on the seals **28, 38** and the sheath **291, 391** of the air valve **29, 39** such that the trough **24** of the upper die **20** and the trough **34** of the lower die **30** are well airtight. At the same time, an air pump (not shown) exhausts air through the air valve **29, 39,** the trough **24, 34** and the openings **22, 32** from the cavity **14** of the die **12.** High pressure gas is pumped into an envelope **42** inside the tube **10** via an air valve **44** such that the tube **10** is inflated to stop against the periphery of the cavity **14.** Since the resin of the pre-pregs is melt by the heat of the die **12,** the air bubbles **18** between the pre-pregs can be drawn out via the openings **22, 32.** Besides, the air around the die **12** and the air inside the annular groove **16** can also be exhausted such that the air bubbles **18** between the pre-pregs can be drawn out through the gap between the upper die **20** and the lower die **30.** The pre-pregs is then cured after a predetermined period of time. Thus, there are no or few air bubbles in the product formed by the method of the present invention such that the structural strength of the product is excellent. Furthermore, surplus resin can be drawn out via the gap between the upper die **20** and the lower die **30** and stay in the annular groove **16.** Or the surplus resin can be drawn out via the opening **22; 32** and stay in the trough **24, 34.** By either way, the wall thickness of the product is more even than the one formed by conventional method; hence the mechanical strength of the product of the present invention is also more uniform.

The forming method of the present invention can apply to various product made by fiber reinforced material, especially those product having a large surface area, such as airplane parts, motor vehicle parts, sports goods, baggage parts, computer parts, bicycle parts, etc. The products of the forming method of the present invention have improved mechanical strength and lighter weight than conventional ones.

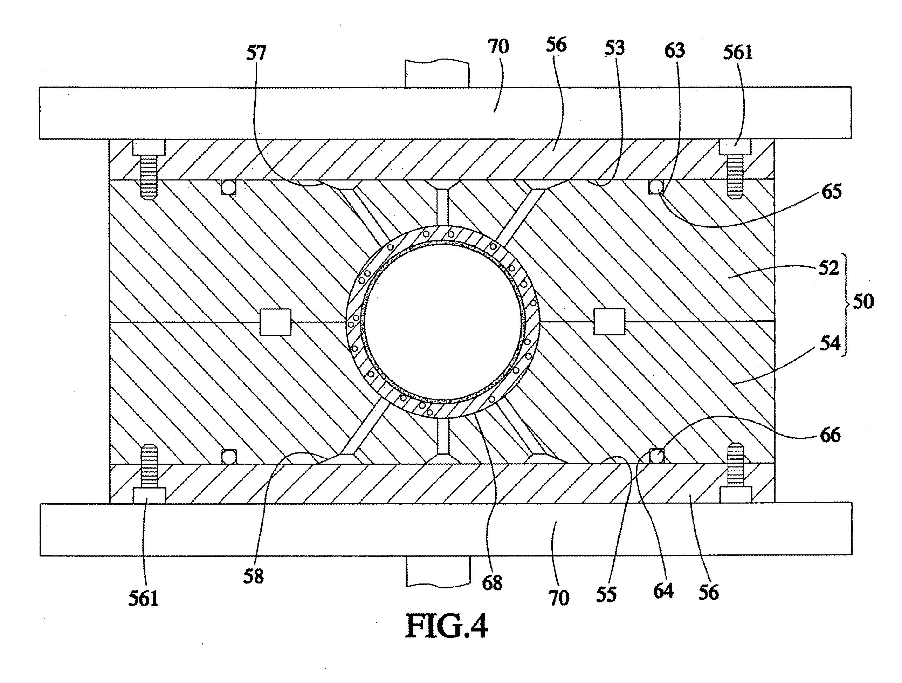

In this embodiment, the surplus resin drawn out via the opening **22, 32** stay in the troughs **24, 34,** which are removed after the forming process is over. But the resin often adheres to the heating boards **40,** which is very difficult to remove. Therefore the structure of the die can be changed as shown in FIG 4, in which the die **50** adopted by the second preferred embodiment of the present invention is shown. The die **50** is the same with the one provided in the first embodiment but two boards **56** are respectively mounted on the top surface **53** of the upper die **52** and the bottom surface **55** of the lower die **54** by several screw bolt **561.** The trough **57** and the receiving trench (not shown) of the upper die **52,** and the trough **58** and the receiving trench (not shown) of the lower die **54** are all covered by the boards **56** such that the troughs **57, 58** communicates with the space outside the die **50** only through two air valve (not shown). Two seal **65, 66** are respectively received in the annular channel **63** of the upper die **52** and the annular channel **64** of the lower die **54** and stop against the boards **56.** Thus, an air pump (not shown) exhausts air, as well as surplus resin, through the air valves from the cavity **68.** Two heating boards **70** heat the die **50** via the boards **56** such that the resin is avoided adhering to the heating boards **70.** The resin in the trough **57, 58** or on the boards **56** is removed after the boards **56 is** disassemble from the die **50.** Removing of the resin is convenience since the boards **56** are taken away from the die **50** easily.

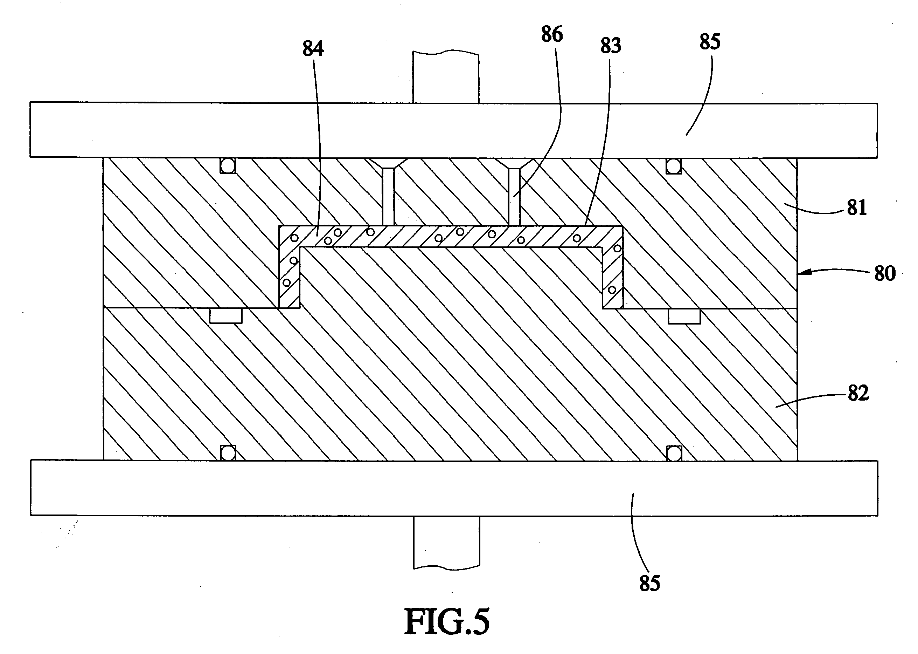

The method adopted by aforesaid two embodiments is so-called inner pressure method. The spirit of the present invention can be applied to outer pressure method. As shown in FIG 5, the die **80** adopted by the forming method in accordance with the third embodiment of the present invention comprises an upper die **81,** a lower die **82** and a cavity **83** defined between the upper die **81** and the lower die **82.** The upper die **81** is provided with two openings **86.** The method comprises the steps of putting several pre-pregs layer by layer into a sheet **84,** and then putting the sheet **84** into the cavity **83,** and then heating the die **80** with the two heating boards **85** and exhausting air through the openings **86.** There is no need to pump high pressure air into the envelope inside the tube as the inner pressure method. In this embodiment, exhausting air through the openings **86** of the upper die **81** is efficient enough to draw out the air bubbles in the sheet **84** since the sheet **84** is relatively thin. The lower die **82** may be provided with several openings under the situation the sheet is relatively thick.

It is worth to mention that the inner pressure method and the outer pressure method can be adopted within one die, for example, the die for a hockey stick. The handle of the hockey stick is formed by inner pressure method and the bottom blade is form by outer pressure method. The die is also provided with openings for exhausting air.

Base on the spirit of the present invention, the die provided with at least one opening for exhausting air is enough to implement the method of the present invention. It is still fallen within the scope of the present invention no matter how many parts the die is divided, how and what the quantity and the position of the openings is changed, whether the trough, annular channel or the receiving trench is provided or not, or in what way the die is heated. Although particular embodiments of the invention have been described in detail for purposes of illustration, various modifications and enhancements may be made without departing from the spirit and scope of the invention. Accordingly, the invention is not to be limited except as by the appended claims.

## Claims

1. A forming method for fiber reinforced resin comprises the steps of:
(a) putting a stack of pre-pregs into a cavity (14, 68, 83) of a die (12, 50, 80) having at least one opening (22, 86) in communication with said cavity (14, 68, 83) and the space outside said die (12, 50, 80); and
(b) heating said die (12, 50, 80) and exhausting air through said opening (22, 86) from said cavity (14, 68, 83) of said die (12, 50, 80).

2. The forming method as claimed in claim 1, wherein an outer surface of said die (12, 50, 80) is provided with a trough (24, 34, 57, 58) in which said opening (22, 86) is located.

3. The forming method as claimed in claim 2, wherein said outer surface of said die (12, 50, 80) is provided with an annular channel (25, 35, 63, 64) surrounding said trough (24, 34, 57, 58) for receiving a seal (28, 38, 65, 66).

4. The forming method as claimed in claim 2, wherein said die (12, 50, 80) is provided with a receiving trench (26, 36) extending from said trough (24, 34, 57, 58) for receiving an air valve (29, 39).

5. The forming method as claimed in claim 4, wherein said outer surface of said die (12, 50, 80) is provided with an annular channel (25, 35, 63, 64) surrounding said trough (24, 34, 57, 58) for receiving a seal (28, 38, 65, 66).

6. The forming method as claimed in claim 4, wherein said trough (24, 34, 57, 58) and said receiving trench (26, 36) of said die (12, 50, 80) are covered with a board (56) such that said trough (24, 34, 57, 58) communicates with the space outside said die (12, 50, 80) through said air valve (29, 39).

7. The forming method as claimed in claim 6, wherein said outer surface of said die (12, 50, 80) is provided with an annular channel (25, 35, 63, 64) surrounding said trough (24, 34, 57, 58) for receiving a seal (28, 38, 65, 66).

8. The forming method as claimed in claim 1, wherein said pre-pregs are rolled into a tube (10) in step (a) and high pressure gas is pumped into said tube (10) in step (b).
